(19) Europäisches Patentamt
European Patent Office
Office européen des brevets

(11) Publication number: **0 467 552 B1**

# (12) EUROPEAN PATENT SPECIFICATION

(45) Date of publication of patent specification: **18.01.95**

(51) Int. Cl.[6]: **C09K 9/02**, G03C 1/685

(21) Application number: **91306004.2**

(22) Date of filing: **02.07.91**

## (54) Photochromic compositions.

(30) Priority: **04.07.90 JP 176950/90**
**04.07.90 JP 176951/90**
**04.07.90 JP 176952/90**
**09.07.90 JP 181241/90**

(43) Date of publication of application:
**22.01.92 Bulletin 92/04**

(45) Publication of the grant of the patent:
**18.01.95 Bulletin 95/03**

(84) Designated Contracting States:
**DE FR GB IT**

(56) References cited:
**EP-A- 0 195 898**
**EP-A- 0 350 009**
**US-A- 3 322 542**

**PATENT ABSTRACTS OF JAPAN, vol. 13, no. 302 (C-616)(3650), 12 July 1989; & JP-A-190285**

**PATENT ABSTRACTS OF JAPAN, vol. 14, no. 189 (P-1037)(4132), 17 April 1990; & JP-A-235442**

**PATENT ABSTRACTS OF JAPAN, vol. 12, no. 5 (C-467)(2852), 8 January 1988; & JP-A-62 164 685**

(73) Proprietor: **LINTEC Corporation**
**Honcho 23-23**
**Itabashi-ku**
**Tokyo 173 (JP)**

(72) Inventor: **Takahashi, Kazuhiro**
**3-17 Shiba 5-chome**
**Kawaguchi-shi,**
**Saitama 333 (JP)**
Inventor: **Nakada, Yasukazu**
**14-28 Shibashita 1-chome**
**Kawaguchi-shi,**
**Saitama 333 (JP)**
Inventor: **Maruoka, Shigenobu**
**2-68 Furuichiba, Saiwai-ku**
**Kawasaki-shi 211 (JP)**
Inventor: **Tsuchida, Ichiro**
**205 Funato**
**Koshigaya-shi,**
**Saitama 343 (JP)**
Inventor: **Saito, Takanori**
**2-2-604, Satsukidaira 2-chome**
**Misato-shi,**
**Saitama 341 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

(74) Representative: **Marsden, John Christopher et al**
**Frank B. Dehn & Co.**
**Imperial House**
**15-19 Kingsway**
**London WC2B 6UZ (GB)**

## Description

The present invention relates to photochromic compositions, more particularly to photochromic materials with good light-resistance which may be repeatedly and reversibly coloured and decoloured over a long period of time.

Photochromism means that characteristic of a material whereby it develops a colour under irradiation with exciting radiation such as ultraviolet rays but returns to the initial uncoloured state after the ultraviolet irradiation when allowed to stand or when the material is irradiated with infrared or visible rays or is heated. Thus photochromism means that a material may be repeatedly and reversibly coloured and decoloured.

Photochromic compounds exhibit the above-mentioned characteristics; the colour density of the compounds in the coloured and decoloured states varies with the intensity of the exciting radiation and the duration of irradiation. Such compounds have been widely used in conjunction with materials such as window glasses in buildings and lenses in sunglasses, thereby utilizing their photochromic characteristics. Furthermore, photochromic materials using such photochromic compounds have possible applications as image-forming materials for copying, recording and the like.

Photochromic compounds may be broadly classified as either organic or inorganic.

Most inorganic photochromic compounds are solid, granular materials typically having a higher specific gravity than that of organic high molecular weight compounds such as are commonly used as binders for photochromic compositions. Accordingly it is often difficult to dissolve or homogeneously disperse inorganic photochromic compounds in such organic high molecular weight compounds. On the other hand, organic photochromic compounds can normally be homogeneously mixed with organic high molecular weight compounds, and so can be used to produce photochromic films exhibiting uniform colouration and decolouration, and to produce photochromic laminates exhibiting such uniform colouration and decolouration in which a photochromic layer is laminated on a substrate.

However, some problems still occur with organic photochromic compounds. For example, if an organic photochromic compound is irradiated with exciting radiation for a long period of time, the compound may be oxidized and therefore suffer deterioration and at least partial loss of its photochromic characteristics.

Therefore, various methods have been proposed to improve photochromic compositions containing organic photochromic compounds. Specifically it has been proposed to lessen the deterioration of an organic photochromic compound by adding hydroxybenzophenone, hydroxybenzotriazole or derivatives thereof to the composition (as described in U.S. Patent No. 3,212,898), by adding a hindered amine compound thereto (as described in U.S. Patent No. 3,488,290) and by adding a nickel complex thereto (as described in Japanese Patent laid-open Publication No. 58(1983)-173181). Also known are a method of adding a thioether compound to the composition, as described in Japanese Patent Laid-open Publication No. 58(1983)-113203, and a method of adding a hindered phenol compound or a phosphite compound thereto, as described in U.S. Patent No. 3,488,290.

However, ultraviolet absorbing agents such as hydroxybenzophenone and hydroxybenzotriazole absorb ultraviolet rays required for exciting the organic photochromic compound to develop a colour, and thus by their presence lower the light sensitivity of the photochromic composition. Alternatively, deterioration of the organic photochromic compound caused by application of light may be accelerated, depending on the nature of the organic photochromic compound and the ultraviolet absorbing agent used.

Hindered amine light stabilizers such as 2,2,6,6-tetramethylpiperidine and 1,2,2,6,6-pentamethylpiperazine derivatives may exhibit a plurality of functions, for example as a singlet oxygen quencher, a radical-trapping agent and a hydroperoxide decomposing agent. However, photochromic compositions containing a hindered amine light stabilizer and an organic photochromic compound in practice exhibit insufficient light resistance; hence there is a need for photochromic compositions with improved light resistance, particularly in cases where the resulting photochromic material is expected to be used repeatedly.

The photochromic compositions containing nickel complexes and organic photochromic compounds also exhibit insufficient light resistance, and additionally are coloured owing to the nickel complex even in the absence of exciting irradiation.

Further, in the cases where hindered phenol compounds, phosphite compounds or thioether compounds are used, the resulting photochromic compositions also exhibit insufficient light resistance.

The present invention provides novel photochromic compositions comprising an organic photochromic compound and a tertiary amine dissolved or dispersed in an organic high molecular weight binder, characterised in that the tertiary amine is a compound having the formula (I):

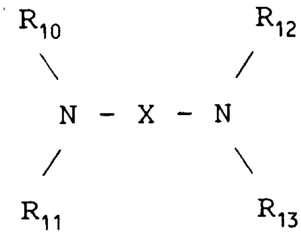

(I)

(wherein each of $R_{10}$ to $R_{13}$, which may be the same or different, represents an alkyl or epoxyalkyl group having up to 4 carbon atoms and optionally substituted by at least one N-, S- or O-containing substituent, and X is an alkylene group optionally including in the carbon chain thereof at least one of N, S or O and/or optionally carrying at least one N-, S- or O-containing substituent, or is an optionally substituted cycloalkylene, arylene (e.g. phenylene) or N-, S-, O- or P-containing heterocyclic ring or a plurality of such rings optionally interlinked by one or more alkylene groups) or a compound of formula (II)

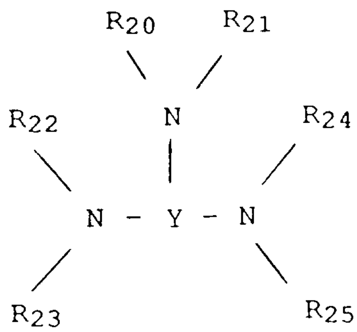

...(II)

(wherein each of $R_{20}$ to $R_{25}$, which may be the same or different, represents an alkyl group containing up to 4 carbon atoms and optionally substituted by at least one N-, S- or O-containing substituent, and Y is an optionally substituted cycloalkane or N-, S-, O- or P-containing heterocyclic ring, said cycloalkane or heterocyclic ring being bonded to each tertiary nitrogen atom either directly or by way of an alkylene group optionally containing at least one of N, O or

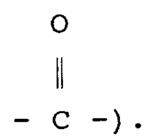

Examples of groups which may be present as $R_{10}$ to $R_{13}$ in formula (I) include methyl, ethyl, the propyl and butyl groups, 2-hydroxyethyl and 2,3-epoxypropyl.

Substituents which may be present on X groups in formula (I) include alkyl groups (e.g. methyl or ethyl), alkoxy groups (e.g. methoxy or ethoxy), and halogen atoms (e.g. Cl or Br).

Examples of linking groups X are as follows:-

$-CH_2-$, $(CH_2)_3$, $(CH_2)_6$

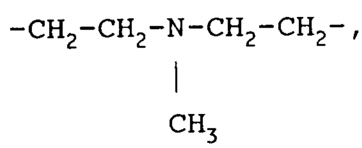

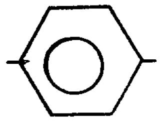 , 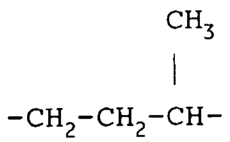 , 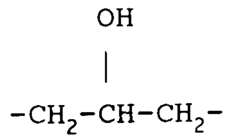

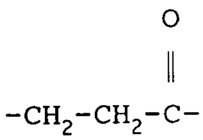 , 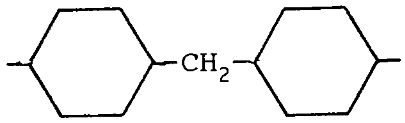 ,

$-CH_2-CH_2-O-CH_2-CH_2-CH_2-$ ,

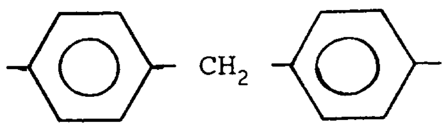 ,

$-CH_2-CH_2-CH_2-NH-CH_2-CH_2-CH_2-$

Examples of specific tertiary amines of formula (I) include:-

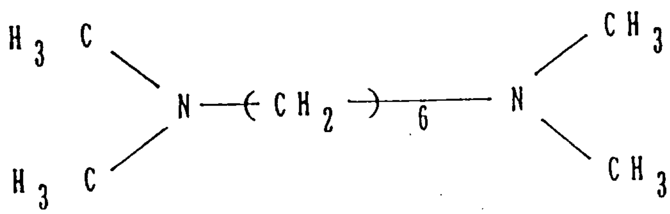

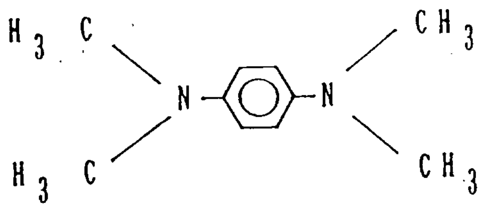

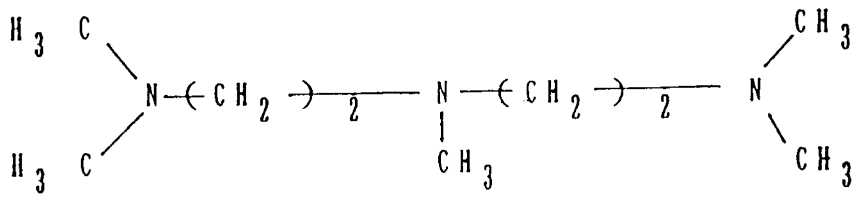

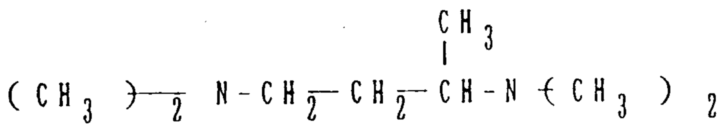

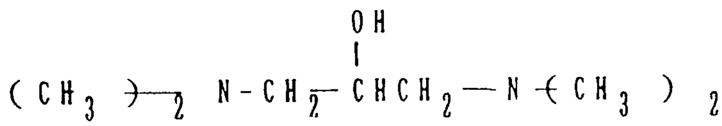

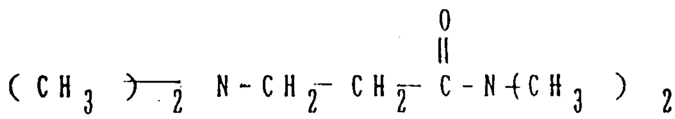

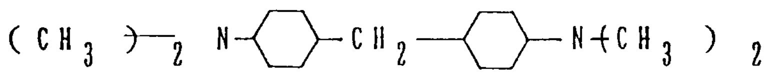

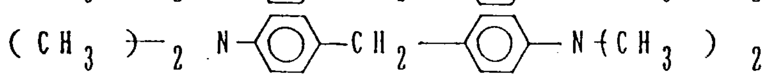

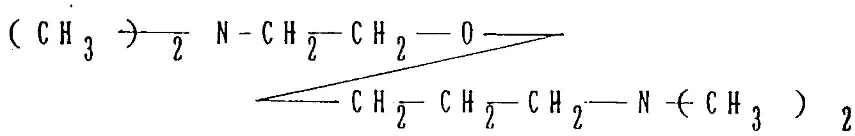

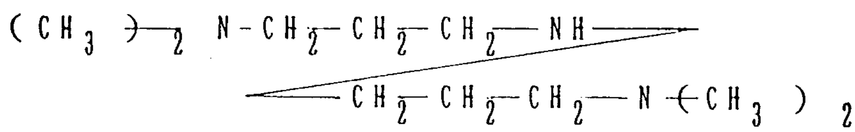

$(C_2H_5)_2N-CH_2-N(C_2H_5)_2$

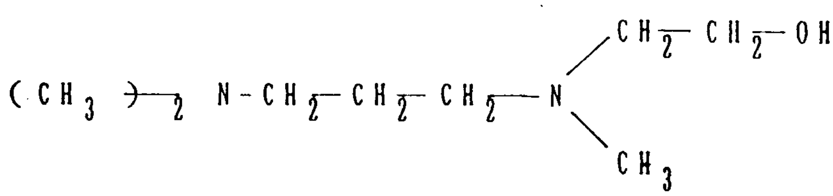

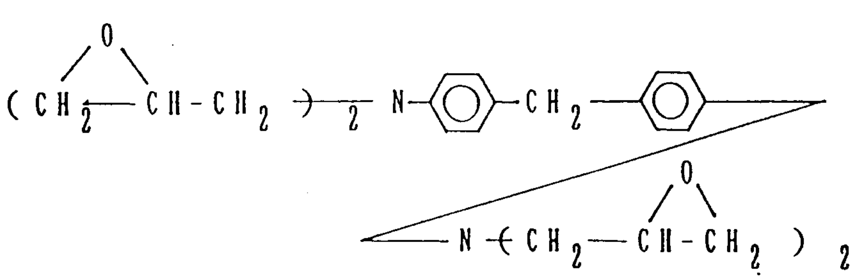

Examples of linking groups Y in formula (II) are as follows:

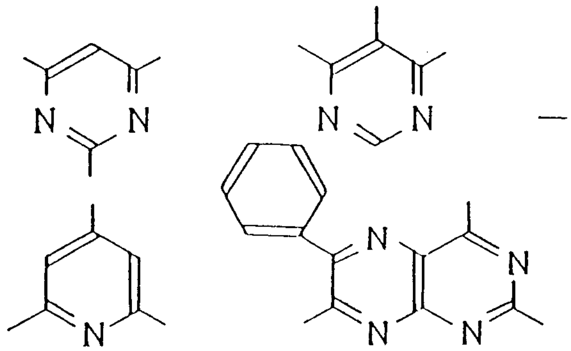

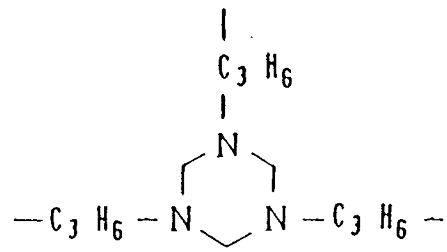

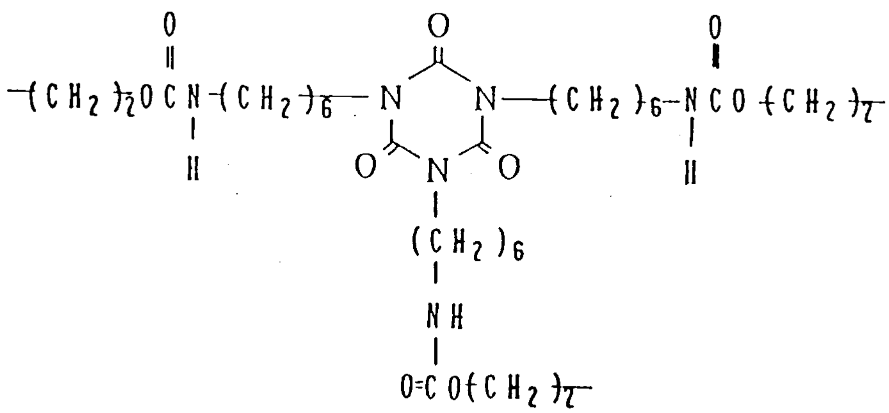

Examples of specific tertiary amines of formula (II) include:

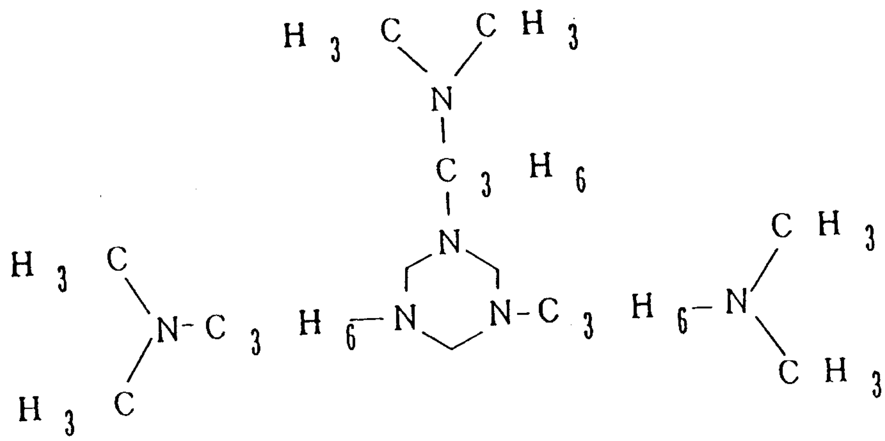

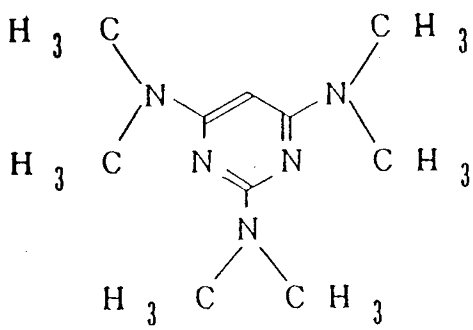

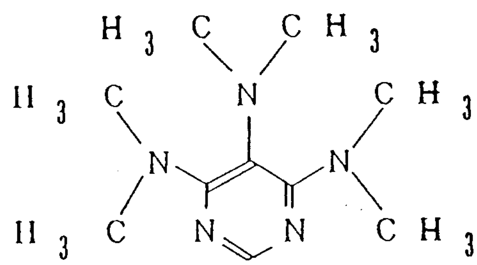

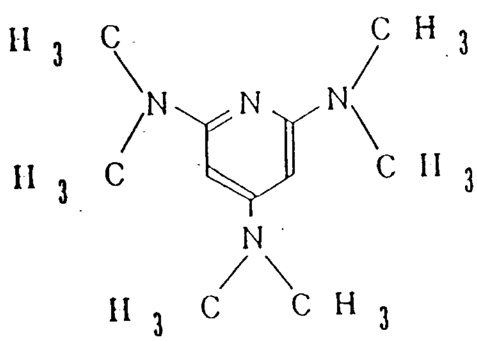

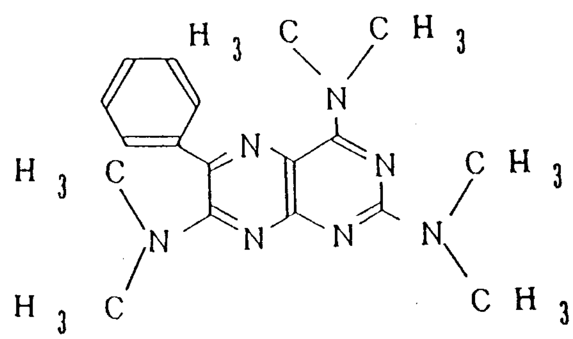

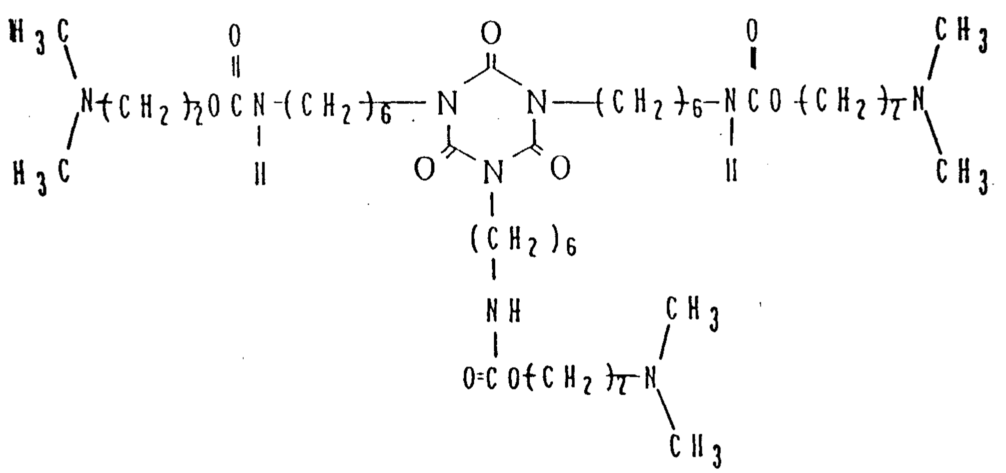

In formulae (I) and (II) any N-containing substituents present may, for example, include primary amino groups, secondary amino groups such as lower (e.g. $C_{1-6}$) alkylamino, and tertiary amino groups such as di(lower alkyl)amino. O-containing substituents include hydroxy, epoxy, oxo and etherifying groups such as lower alkoxy; S-containing substituents include thio analogues of these groups.

Alkylene groups present in formulae (I) and (II) may, for example, contain up to 10, e.g. 1-6, carbon atoms, and may be straight or branched.

Cycloalkyl and cycloalkylene groups present in formulae (I) and (II) may, for example, contain up to 12, e.g. 5-7, carbon atoms.

Aryl groups present in formulae (I) and (II) may, for example, be mono- or bi-cyclic and contain up to 20, e.g. 6-12, carbon atoms.

Heterocyclic groups present in formulae (I) and (II) may, for example, contain one or more 5- or 6-membered rings, at least one of which will contain one or more heteroatoms, and may, for example, contain up to 20, e.g. 4-10, carbon atoms.

Organic photochromic compounds useful in compositions according to the invention include spiro compounds having the formula (III):

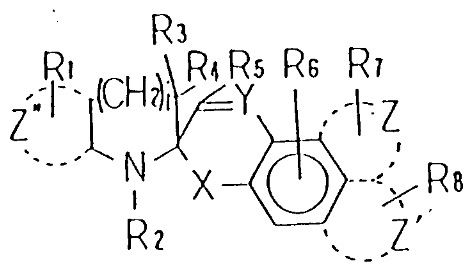

...(III)

In the formula (III), i is 0 or 1; X is -O- or -S-; Y is selected from =CH-, $=CR_9$- and =N-; and each of Z, Z' and Z'' may be present or absent, and if present, each of them may be a saturated ring or an unsaturated ring which may contain a heteroatom. Examples of the above-mentioned saturated rings include a cyclohexyl ring and a cyclopentyl ring. Examples of the above-mentioned unsaturated rings include a benzene ring and a heterocyclic ring containing N, S or O.

$R_1$, $R_6$, $R_7$ and $R_8$ in the formula (III) may be the same or different, and each of them is selected from a hydrogen atom, a halogen atom, a nitro group, an unsubstituted or substituted amino group, a hydroxyl group, an oxycarbonyl group, a carboxyl group, a sulfonic acid group, a carbamoyl group, a carboxamide group, a sulfamoyl group, a sulfonamide group, a sulfanyl group, a sulfonyl group, a cyano group, an unsubstituted or substituted alkyl group, an unsubstituted or substituted aryl group, an alkoxy group, an aryloxy group, and an acyl group.

$R_2$ to $R_5$ and $R_9$ in the formula (III) may be the same or different, and each of them is a hydrogen atom, an unsubstituted or substituted alkyl group having 1-18 carbon atoms, an aralkyl group having 7-18 carbon atoms, or a cycloalkyl group having 4-10 carbon atoms.

Examples of the substituting groups in each of $R_1$ to $R_9$ of the formula (III) include a halogen atom, an alkoxy group having 1-20 carbon atoms, an amino group, a nitro group, a monoalkylamino or dialkylamino group having 1-36 carbon atoms, a hydroxyl group, a carboxyl group, an oxycarboxyl group having 20 or less carbon atoms, an acyl group having 20 or less carbon atoms, an oxycarbonyl group having 20 or less carbon atoms, a carbamoyl group having 20 or less carbon atoms, and a sulfamoyl group having 20 or less carbon atoms.

As examples of the spiro compounds, there can be mentioned the following spiroxazine compounds, spiropyran compounds and thiopyran compound:-

[Spiroxazine compound]

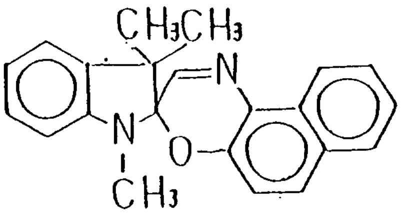

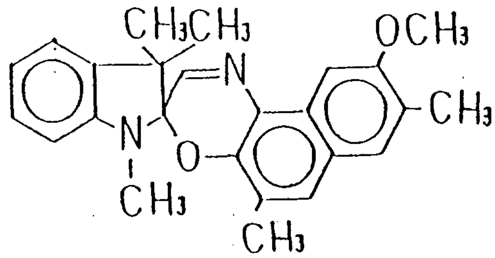

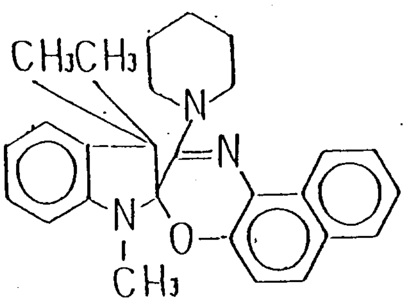

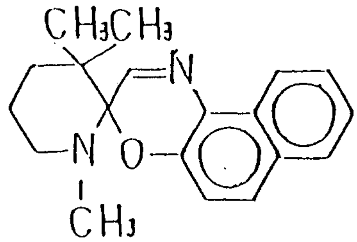

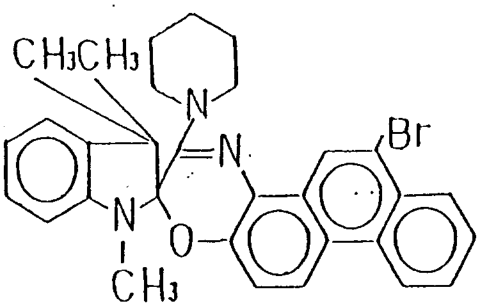

[Spiropyran compound]

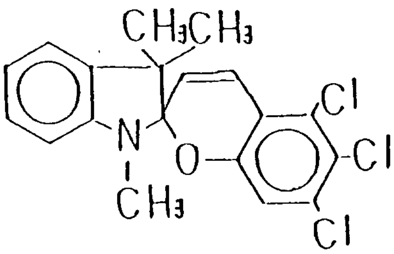

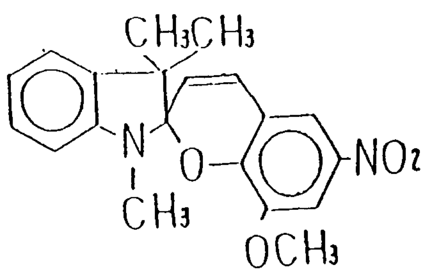

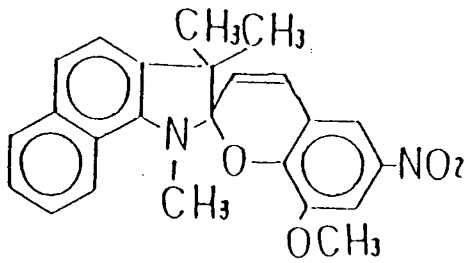

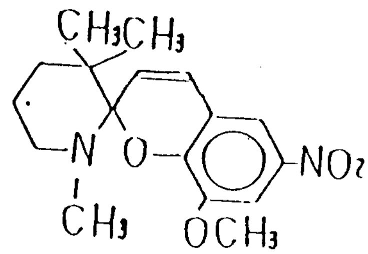

[Thiopyran compound]

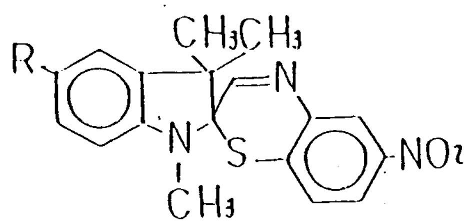

In the above formula, specific examples of R include $-OCH_3$, $-CH_3$, -H, -Cl and $-NO_2$.

The organic high molecular weight compound used as binder in compositions of the invention preferably has a good affinity for both the organic photochromic compound and the tertiary amine and preferably is optically transparent. Examples of such high molecular weight compounds include polymethylmethacrylate, polyvinyl acetate, polyvinyl butyral and polyvinyl alcohol.

In the photochromic compositions of the invention, the organic photochromic compound may, for example, be used in an amount of 0.01 to 25 parts by weight, e.g. 0.5 to 2 parts by weight, per 100 parts by weight of the organic high molecular weight compound. The tertiary amine compound may, for example, be used in an amount of 0.001 to 100 parts by weight, e.g. 3 to 30 parts by weight, per 100 parts by weight of the organic high molecular weight compound.

The photochromic compositions of the invention may incorporate a crosslinking agent such as an isocyanate compound, an epoxy compound, an amine compound, an ethyleneimine compound or a metal chelate compound in an appropriate amount, depending on the nature of the organic high molecular weight compound.

Furthermore, a plasticizer can be also added in an appropriate amount to the photochromic compositions of the invention, depending on the nature of the organic high molecular weight compound. Examples of plasticizers employable in the invention include phosphate derivatives such as trioctyl phosphate and triphenyl phosphate, adipate derivatives such as didecyl adipate and dibutyl adipate, sebacate derivatives such as dibutyl sebacate and dioctyl sebacate, azelate derivatives such as dioctyl azelate and dihexyl azelate, citrate ester derivatives such as triethyl citrate and tributyl citrate, glycol ester derivatives such as methyl phthalyl ethyl glycolate and butyl phthalyl butyl glycolate, trimellitate derivatives such as trioctyl trimellitate, phthalate derivatives such as dioctyl phthalate, ricinoleate derivatives such as methyl acetyl ricinoleate and butyl acetyl ricinoleate, polyester derivatives such as polypropylene adipate and polypropylene sebacate, epoxy derivatives such as epoxy butyl stearate and epoxy octyl stearate, and glycol derivatives such as polyethylene glycol and polypropylene glycol.

According to a further aspect of the invention, the novel photochromic compositions as hereinbefore defined may be prepared by a process which comprises adding an organic photochromic compound and a tertiary amine as hereinbefore defined to a solution of an organic high molecular weight binder and thereafter recovering a photochromic composition from the resulting product mixture. If necessary or desired, a crosslinking agent and/or a plasticizer, e.g. as hereinbefore described, may also be added prior to recovery of the photochromic composition.

Examples of solvents which may be employed in this process include water; alcohols such as methanol or ethanol; ketones such as acetone, methyl ethyl ketone or methyl butyl ketone; aromatic solvents such as benzene, toluene or xylene; ethers such as diethyl ether or tetrahydrofuran; esters such as methyl acetate

or ethyl acetate; and mixtures of two or more of these solvents.

Recovery of the photochromic composition from the product mixture may be effected by, for example, techniques such as solvent evaporation (e.g. by applying the mixture to a surface of a substrate by a coating method such as cast coating or roll coating, and drying the layer thus obtained to yield a material in the form of a laminate in which a photochromic layer is laminated onto a surface of the substrate), spray drying or similar methods (e.g. to form a particulate or powdered photochromic composition) or solvent precipitation (e.g. by adding the mixture, with stirring, to a solvent which has little or no solubility for the high molecular weight compound, and separating and drying the resulting precipitate to yield a granular photochromic composition).

Photochromic compositions obtained by such procedures may be further treated, e.g. by thermoforming techniques, to yield particular desired products. Thus, for example, a photochromic composition according to the invention may be melted and kneaded and thereafter subjected to injection moulding or extrusion moulding to yield a photochromic material, e.g. in the form of a film.

The invention also embraces the use of the novel photochromic compositions hereinbefore defined in the manufacture of photochromic materials such as films and laminates, e.g. using the above-described moulding and coating techniques, and films and laminates so produced.

The following non-limitative Examples serve to illustrate the invention.

Example 1

In 23.3 g of a mixed solvent of toluene and 2-propanol (toluene : 2-propanol = 1 : 1) was dissolved 0.1 g of spiroindolinophenanthrooxazine having a peak absorption at 366 nm, and in the resulting solution was further dissolved 9.8 g of polyvinyl butyral (trade name: Denka Butyral #2000-L, available from Denki Kagaku Kogyo K.K.). Then, to the resulting solution was added 0.1g of N,N,N',N'-tetramethyl-1,6-diaminohexane (tertiary amine compound) and the mixture was stirred, to prepare 33.4 g of a solution.

The solution was applied to a polyethylene terephthalate base film having a thickness of 38 µm using a doctor blade, and the layer thus formed was dried at 80°C for 3 minutes to form a photochromic layer having a thickness of 25 µm on the base film. Thus, a photochromic laminate was obtained.

The photochromic laminate thus obtained was colourless and transparent in the normal state, but developed a uniform colour of blue-violet when irradiated with ultraviolet rays. The coloured photochromic laminate returned to the initial colourless and transparent state upon irradiation with infrared or visible rays or by heating.

The above-mentioned spiroindolinophenanthrooxazine is ring-opened under irradiation with ultraviolet rays to form a merocyanine structure, so as to develop a colour. In this stage, if the compound deteriorates too much, the compound cannot return to the initial spiroindolinophenanthrooxazine structure even when the irradiation with the ultraviolet rays is terminated.

Therefore, the obtained photochromic laminate was evaluated for light-resistance in the following manner.

The colourless and transparent photochromic laminate in the initial state was measured for absorbance $A_0$ at 366 nm (maximum absorption wavelength of spiroindolino-phenanthrooxazine) by the use of an ultraviolet, infrared and visible rays automatic spectrophotometer (MPS-2000, produced by Shimazu Seisakusho Co.).

The photochromic laminate was then continuously irradiated with ultraviolet rays for periods of 50 hours and 100 hours using a carbon arc lamp equipped with a fade meter (CF-20S, produced by the same company). Thereafter, the photochromic laminate was heated to 80°C to make the laminate completely colourless and transparent. This colourless and transparent photochromic laminate was measured for absorbance $A_t$ at 366 nm in the same manner as described above.

The values $A_0$ and $A_t$ obtained as above were introduced into the following equation, to evaluate the light-resistance of the photochromic laminate.

$$\text{Light-resistance (\%)} = [A_t/A_0] \times 100$$

In the evaluation of the light-resistance, the larger the value obtained by the above equation becomes, the higher the light-resistance of the laminate becomes.

The results are set forth in Table 1.

Example 2

The procedures of Example 1 were repeated except for using N,N,N',N-tetramethyl-p-phenylenediamine as the tertiary amine compound, to produce a photochromic laminate. The obtained photochromic laminate was evaluated for light-resistance in the same manner as described in Example 1.

The results are set forth in Table 1.

Example 3

The procedures of Example 1 were repeated except for using N,N,N',N'',N''-pentamethyl-diethylenetriamine as the tertiary amine compound, to produce a photochromic laminate. The obtained photochromic laminate was evaluated for light-resistance in the same manner as described in Example 1.

The results are set forth in Table 1.

Example 4

The procedures of Example 1 were repeated except for using 1,3,5-tris(3-dimethylaminopropyl)-hexahydro-s-triazine as the tertiary amine compound, to produce a photochromic laminate. The obtained photochromic laminate was evaluated for light-resistance in the same manner as described in Example 1.

The results are set forth in Table 1.

Comparative Example 1

The procedures of Example 1 were repeated except for not using any tertiary amine compound, to produce a photochromic laminate. The obtained photochromic laminate was evaluated for light-resistance in the same manner as described in Example 1.

The results are set forth in Table 1.

Comparative Examples 2-6

The procedures of Example 1 were repeated except for using a hindered phenol type antioxidant (trade name: Irganox 1010, available from Ciba-Geigy), a phosphite type antioxidant (trade name: Mark 135A, available from Adeca Argus Chemical Co. Ltd.), a thioether type antioxidant (Trade name: AO-503A, available from Adeca Argus Chemical Co. Ltd.), a nickel metal complex type light stabilizer (trade name: Cyasorb UV1084, available from American Cyanamid Co.), and a hindered amine type light stabilizer (trade name: Sanol LS-770, available from Sankyo Co., Ltd.), respectively, as the tertiary amine compound, to produce photochromic laminates of Comparison Examples 2 to 6.

Subsequently, each of the photochromic laminates of Comparison Examples 2 to 6 was measured for absorbance $A_t$ in the same manner as described in Example 1, and they were evaluated for light-resistance in the same manner as described in Example 1.

The results are set forth in Table 1.

As is evident from the results set forth in Table 1, all of the photochromic laminates obtained in Comparison Examples 1 to 6 are lower than the photochromic laminates obtained in Examples 1 to 4 in both their light sensitivity for colouration and their light-resistance. This confirms that the photochromic compositions of the present invention have improved light sensitivity for colouration and light-resistance as compared with conventional photochromic compositions, since the photochromic laminates obtained in Examples 1 to 4 and Comparison Examples 1 to 6 have identical structures except for the nature of their photochromic compositions.

Table 1

| | Additives | Light-resistance 50 hours | Light-resistance 100 hours |
|---|---|---|---|
| Example 1 | N,N,N',N'-tetramethyl-1,6-diaminohexane | 90 | 82 |
| Example 2 | N,N,N',N'-tetramethyl-p-phenylenediamine | 90 | 80 |
| Example 3 | N,N,N',N",N"-pentamethyl-diethylenetriamine | 91 | 84 |
| Example 4 | 1,3,5-tris(3-dimethylaminopropyl)hexahydro-s-triazine | 87 | 82 |
| Comp. Ex. 1 | none | 57 | 24 |
| Comp. Ex. 2 | hindered phenol (Irganox 1010) | 64 | 38 |
| Comp. Ex. 3 | phosphite (Mark 135A) | 41 | 21 |
| Comp. Ex. 4 | thioether (Mark AO-503A) | 54 | 29 |
| Comp. Ex. 5* | Ni complex (Cyasorb UV1084) | 80 | 65 |
| Comp. Ex. 6 | hindered amine (Sanol LS-770) | 73 | 45 |

The laminate indicated by the mark "*" was green owing to the nickel complex even before the laminate was irradiated with ultraviolet rays.

## Claims

1. A photochromic composition comprising an organic photochromic compound and a tertiary amine dissolved or dispersed in an organic high molecular weight binder, characterised in that said tertiary amine is a compound of formula (I)

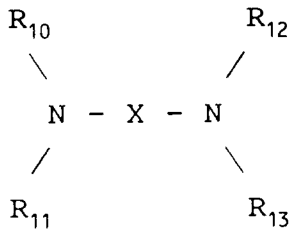

(I)

(wherein each of $R_{10}$ to $R_{13}$, which may be the same or different, represents an alkyl or epoxyalkyl group containing up to 4 carbon atoms and optionally substituted by at least one N-, S- or O-containing substituent, and X is an alkylene group optionally including in the carbon chain thereof at least one of N, S or O and/or optionally carrying at least one N-, S- or O-containing substituent, or is an optionally substituted cycloalkylene, arylene or N-, S-, O- or P-containing heterocyclic ring or a plurality of such rings optionally interlinked by one or more alkylene groups) or a compound of formula (II)

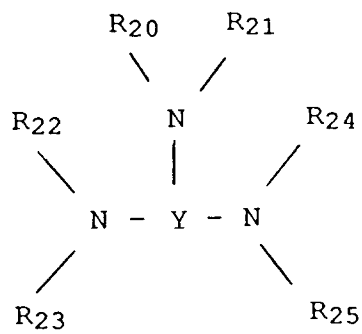

...(II)

(wherein each of $R_{20}$ to $R_{25}$, which may be the same or different, represents an alkyl group containing up to 4 carbon atoms and optionally substituted by at least one N-, S- or O-containing substituent, and Y is an optionally substituted cycloalkane or N-, S-, O- or P-containing heterocyclic ring, said cycloalkane or heterocyclic ring being bonded to each tertiary nitrogen atom either directly or by way of an alkylene group optionally containing at least one of N, O or

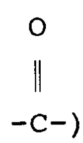

).

2. A photochromic composition as claimed in claim 1 wherein the organic photochromic compound is of formula (III)

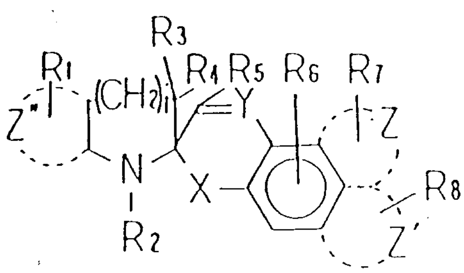

...(III)

(where i is 0 or 1; X is -O- or -S-; Y is selected from =CH-, $=CR_9$- and =N-; each of Z, Z' and Z'' may be present or absent, and when present is a saturated or unsaturated ring which may contain a heteroatom; $R_1$, $R_6$, $R_7$ and $R_8$, which may be the same or different, are each selected from a hydrogen atom, a halogen atom, a nitro group, an unsubstituted or substituted amino group, a hydroxyl group, an oxycarbonyl group, a carboxyl group, a sulfonic acid group, a carbamoyl group, a carboxamide group, a sulfamoyl group, a sulfonamide group, a sulfanyl group, a sulfonyl group, a cyano group, an optionally substituted alkyl group, an optionally substituted aryl group, an alkoxy group, an aryloxy group, and an acyl group; and $R_2$ to $R_5$ and $R_9$, which may be the same or different, are each selected from a hydrogen atom, an optionally substituted $C_{1-18}$ alkyl group, a $C_{7-18}$ aralkyl group and a $C_{4-10}$ cycloalkyl group).

**3.** A photochromic composition as claimed in claim 1 or claim 2 in which the organic photochromic compound is present in an amount of 0.01 to 25 parts by weight per 100 parts by weight of the binder and the tertiary amine is present in an amount of 0.001 to 100 parts by weight per 100 parts by weight of the binder.

**4.** A process for the preparation of a photochromic composition as defined in any of claims 1 to 3 which comprises adding an organic photochromic compound and a tertiary amine as defined in claim 1, optionally together with a crosslinking agent and/or a plasticiser, to a solution of an organic high molecular weight binder and thereafter recovering a photochromic composition from the resulting product mixture.

**5.** A process as claimed in claim 4 wherein the photochromic composition is recovered from the product mixture by solvent evaporation, spray drying or solvent precipitation.

**6.** A process as claimed in claim 4 or claim 5 wherein the photochromic composition is subsequently thermoformed to yield a desired product.

**7.** A photochromic film comprising a photochromic material as defined in any of claims 1 to 3.

**8.** A photochromic laminate comprising a layer of a photochromic material as defined in any of claims 1 to 3 on a surface of a substrate.

**Patentansprüche**

**1.** Photochrome Zusammensetzung, umfassend eine organische photochrome Verbindung und ein tertiäres Amin, gelöst oder dispergiert in einem organischen Bindemittel hohen Molekulargewichts, dadurch gekennzeichnet, daß das tertiäre Amin eine Verbindung der Formel (I) ist

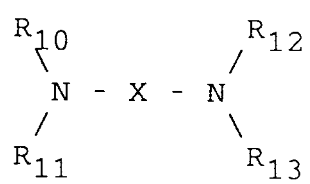

(I)

(worin jeder der Reste $R_{10}$ bis $R_{13}$, der gleich oder verschieden sein kann, eine Alkyl- oder Epoxyalkylgruppe, enthaltend bis zu 4 Kohlenstoffatome und gegebenenfalls substituiert mit mindestens einem N-, S- oder O-enthaltenden Substituenten ist und X eine Alkylengruppe bedeutet, die gegebenenfalls in der Kohlenstoffkette davon mindestens eines von N, S oder O einschließt und/oder gegebenenfalls mindestens einen N-, S- oder O-enthaltenden Substituenten trägt oder ein gegebenenfalls substituiertes Cycloalkylen, Arylen oder N-, S-, O- oder P-enthaltender heterocyclischer Ring oder eine Vielzahl derartiger Ringe, gegebenenfalls miteinander über eine oder mehrere Alkylengruppen verbunden bedeutet) oder eine Verbindung der Formel (II) ist

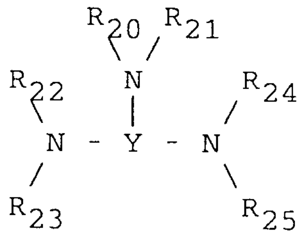

(II)

(worin jeder der Reste $R_{20}$ bis $R_{25}$, der gleich oder verschieden sein kann, eine Alkylgruppe, enthaltend bis zu 4 Kohlenstoffatome, bedeutet und gegebenenfalls mit mindestens einem N-, S- oder O-enthaltenden Substituenten substituiert ist und Y ein gegebenenfalls substituiertes Cycloalkan oder einen N-, S-, O- oder P-enthaltenden heterocyclischen Ring bedeutet, wobei das Cycloalkan oder der heterocyclische Ring an jedes tertiäre Stickstoffatom entweder direkt oder über eine Alkylengruppe, die gegebenenfalls mindestens eines von N, O oder

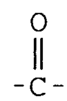

enthält, gebunden ist).

2. Photochrome Zusammensetzung nach Anspruch 1, wobei die organische photochrome Verbindung die Formel (III) aufweist

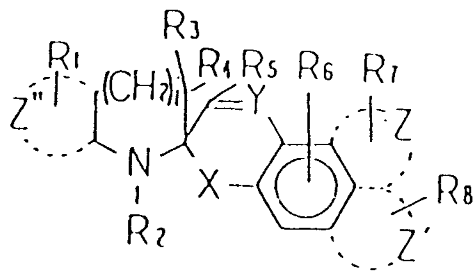

...(III)

(worin i 0 oder 1 bedeutet; X -O- oder -S- darstellt; Y ausgewählt ist aus =CH-, =$CR_9$- und =N-; jeder der Reste von Z, Z' und Z" vorliegen oder nicht vorliegen kann und falls er vorliegt, ein gesättigter oder ungesättigter Ring ist, der ein Heteroatom enthalten kann; $R_1$, $R_6$, $R_7$ und $R_8$, die gleich oder verschieden sein können, jeweils ausgewählt sind aus einem Wasserstoffatom, einem Halogenatom, einer Nitrogruppe, einer unsubstituierten oder substituierten Aminogruppe, einer Hydroxylgruppe, einer Oxycarbonylgruppe, einer Carboxylgruppe, einer Sulfonsäuregruppe, einer Carbamoylgruppe, einer Carboxamidgruppe, einer Sulfamoylgruppe, einer Sulfonamidgruppe, einer Sulfanylgruppe, einer Sulfonylgruppe, einer Cyanogruppe, einer gegebenenfalls substituierten Alkylgruppe, einer gegebenenfalls substituierten Arylgruppe, einer Alkoxygruppe, einer Aryloxygruppe und einer Acylgruppe und $R_2$ bis $R_5$ und $R_9$, die gleich oder verschieden sein können, ausgewählt sind aus einem Wasserstoffatom, einer gegebenenfalls substituierten $C_{1-18}$-Alkylgruppe, einer $C_{7-18}$-Aralkylgruppe und einer $C_{4-10}$-Cycloalkylgruppe).

3. Photochrome Zusammensetzung nach Anspruch 1 oder Anspruch 2, wobei die organische photochrome Verbindung in einer Menge von 0,01 bis 25 Gewichtsteilen pro 100 Gewichtsteile des Bindemittels vorliegt und das tertiäre Amin in einer Menge von 0,001 bis 100 Gewichtsteilen pro 100 Gewichtsteile des Bindemittels vorliegt.

4. Verfahren zur Herstellung einer photochromen Zusammensetzung nach einem der Ansprüche 1 bis 3, umfassend Zugabe einer organischen photochromen Verbindung und eines tertiären Amins nach Anspruch 1, gegebenenfalls zusammen mit einem Vernetzungsmittel und/oder einem Weichmacher zu einer Lösung mit einem organischen Bindemittel hohen Molekulargewichts und anschließend Gewinnen einer photochromen Zusammensetzung aus dem sich ergebenden Produktgemisch.

5. Verfahren nach Anspruch 4, wobei die photochrome Zusammensetzung aus dem Produktgemisch durch Lösungsmittelverdampfung, Sprühtrocknen oder Lösungsmittelfällung gewonnen wird.

6. Verfahren nach Anspruch 4 oder Anspruch 5, wobei die photochrome Zusammensetzung anschließend unter Gewinnung eines gewünschten Produktes warm verformt wird.

7. Photochrome Folie, umfassend ein photochromes Material nach einem der Ansprüche 1 bis 3.

8. Photochromes Laminat, umfassend eine Schicht aus einem photochromen Material nach einem der Ansprüche 1 bis 3 auf einer Oberfläche eines Substrats.

## Revendications

1. Composition photochrome comprenant un composé organique photochrome et une amine tertiaire dissoute ou dispersée dans un liant organique à haut poids moléculaire, caractérisée en ce que l'amine tertiaire est un composé de formule (I)

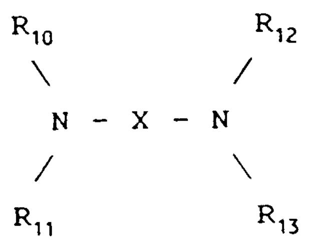

(I)

(dans laquelle chacun de $R_{10}$ à $R_{13}$, qui peuvent être identiques ou différents, représente un groupe alcoyle ou époxyalcoyle ayant jusqu'à 4 atomes de carbone et éventuellement substitué par au moins un substituant azoté, soufré ou oxygéné, et X est un groupe alcoylène incluant éventuellement dans sa chaîne carbonée au moins l'un de M, S ou O et/ou portant éventuellement au moins un substituant azoté, soufré ou oxygéné ou est un cycloalcoylène éventuellement substitué, un arylène ou un hétérocycle azoté, soufré, oxygéné ou phosphoré, ou plusieurs de ces cycles éventuellement reliés par un ou par plusieurs groupes alcoylènes) ou un composé de formule (II)

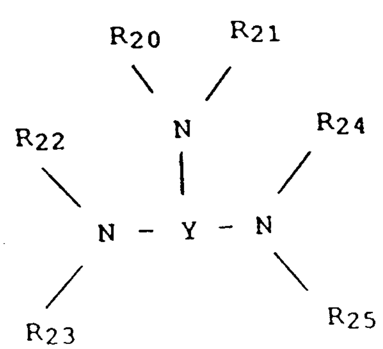

...(II)

(dans laquelle chacun de $R_{20}$ à $R_{25}$, qui peuvent être identiques ou différents, représente un groupe alcoyle ayant jusqu'à 4 atomes de carbone et éventuellement substitué par au moins un substituant azoté, soufré ou oxygéné et Y est un cycloalcane éventuellement substitué ou un hétérocycle azoté, soufré, oxygéné ou phosphoré, le cycloalcane ou l'hétérocycle étant relié à chaque atome d'azote

tertiaire directement ou par le biais d'un groupe alcoylène contenant éventuellement au moins l'un de N, O

ou 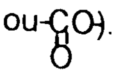.

2. Composition photochrome suivant la revendication 1 dans laquelle le composé organique photochrome répond à la formule (III)

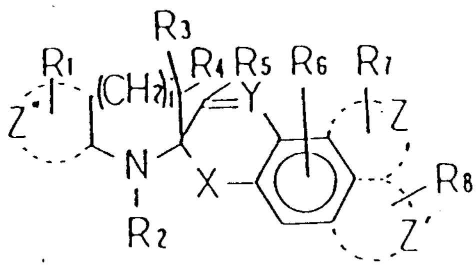

...(III)

(dans laquelle i est 0 ou 1; X est -O- ou -S-; Y est choisi parmi =CH-, =$CR_9$- et N-; chacun de Z, Z' et Z" peut être présent ou absent, et quand il est présent est un cycle saturé ou insaturé qui peut contenir un hétéroatome; $R_1$, $R_6$, $R_7$ et $R_8$, qui peuvent être identiques ou différents, sont chacun choisis parmi un atome d'hydrogène, un atome d'halogène, un groupe nitro, un groupe amino non substitué ou substitué, un groupe hydroxyle, un groupe oxycarbonyle, un groupe carboxyle, un groupe acide sulfonique, un groupe carbamoyle, un groupe carboxamide, un groupe sulfamoyle, un groupe sulfonamide, un groupe sulfanyle, un groupe sulfonyle, un groupe cyano, un groupe alcoyle éventuellement substitué, un groupe aryle éventuellement substitué, un groupe alcoxy, un groupe aryloxy, et un groupe acyle ; et $R_2$ à $R_5$ et $R_9$, qui peuvent être identiques ou différents, sont chacun choisis parmi un atome d'hydrogène, un groupe alcoyle ayant de 1 à 18 atomes de carbone éventuellement substitué, un groupe aralcoyle ayant de 7 à 18 atomes de carbone et un groupe cycloalcoyle ayant de 4 à 10 atomes de carbone).

3. Composition photochrome suivant la revendication 1 ou 2, dans laquelle le composé organique photochrome représente de 0,01 à 25 parties en poids pour 100 parties en poids du liant et l'amine tertiaire représente de 0,001 à 100 parties en poids pour 100 parties en poids du liant.

4. Procédé de préparation d'une composition photochrome telle que définie à l'une quelconque des revendications 1 à 3, qui consiste à ajouter un composé organique photochrome et une amine tertiaire telle que définie à la revendication 1, éventuellement en même temps qu'un agent réticulant et/ou un plastifiant, à une solution d'un liant organique à haut poids moléculaire, puis à recueillir une composition photochrome du mélange de produits obtenu.

5. Procédé suivant la revendication 4, qui consiste à recueillir la composition photochrome du mélange de produits par évaporation du solvant, par séchage par pulvérisation ou par précipitation dans un solvant.

6. Procédé suivant la revendication 4 ou 5, qui consiste à thermoformer ensuite la composition photochrome pour obtenir le produit souhaité.

7. Pellicule photochrome comprenant une matière photochrome, telle que définie à l'une quelconque des revendications 1 à 3.

8. Stratifié photochrome comprenant une couche d'une matière photochrome telle que définie à l'une quelconque des revendications 1 à 3 à la surface d'un substrat.